# EUROPÄISCHE PATENTSCHRIFT

(11) **EP 3 400 491 B1**
(45) Veröffentlichungstag und Bekanntmachung des Hinweises auf die Patenterteilung: **04.08.2021**
(21) Anmeldenummer: 16704837.0
(22) Anmeldetag: 16.02.2016
(51) Int. Cl.: G05B 19/042, H01H 47/00

(54) **SICHERHEITSSCHALTVORRICHTUNG UND SICHERHEITSGERICHTETES GERÄT**
SAFTEY SWITCHING DEVICE AND SAFETY-RELATED DEVICE
DISPOSITIF DE COMMUTATION DE SÉCURITÉ ET APPAREIL ORIENTÉ SÉCURITÉ

(43) Veröffentlichungstag der Anmeldung: 14.11.2018
(73) Patentinhaber: Siemens Aktiengesellschaft, 80333 München (DE)
(72) Erfinder: MAIER, Mario, 92266 Ensdorf (DE)
(86) Internationale Anmeldenummer: PCT/EP2016/053274
(87) Internationale Veröffentlichungsnummer: WO 2017/140350

(56) Entgegenhaltungen:
- US-A1- 2013 233 044
- "NOT-AUS-SCHALTGERAETE, SCHUTZTUERWAECHTER", ANNOUNCEMENT PILZ NSG-D-1-051-07/00, XX, XX, 1. Juli 2000 (2000-07-01), Seiten 1-04, XP000961973,

## Beschreibung

Die Erfindung betrifft eine Sicherheitsschaltvorrichtung und ein sicherheitsgerichtetes Gerät, das mit einer solchen Sicherheitsschaltvorrichtung ausgestattet ist.

Aus DE 43 19 750 A1 ist eine Vorrichtung zur Funktionsüberwachung von Schaltausgängen bekannt, die zwei Mikroprozessoren umfasst. Die Steuereinheiten sind dazu ausgebildet, Standardrelais zu betätigen, die zu einer Brückenschaltung kombiniert sind. In der Vorrichtung sind parallel zwei Stränge mit je zwei Standardrelais angeordnet. Beide Stränge sind mit den Anschlüssen eines Schaltausgangs verbunden und ermöglichen so ein sicheres Schalten. Ferner sind die beiden Stränge aus Standardrelais mit einer induktiven Übertragung verbunden, die zur Überwachung des Schaltzustandes des Standardrelais mit den Mikroprozessoren verbunden sind.

DE 10 2010 060 323 A1 offenbart eine Schaltanordnung Betätigung von zwei Relais mittels eines Mikrocontrollers, der von einem Watchdog überwacht wird. Die Schaltanordnung weist vier elektrische Schalter auf, die je Relais paarweise dem Mikrocontroller und dem Watchdog zugeordnet sind. Die Relais sind dabei ohne zwangsgeführte Kontakte ausgebildet. Der Watchdog ist dazu ausgebildet, den Mikrocontroller zu überwachen und bei einer Funktionsstörung des Mikrocontrollers die Stromversorgung der Relais über einen separaten elektrischen Schalter zu unterbrechen.

Aus EP 2 383 762 B1 ist eine Sicherheitsschaltvorrichtung bekannt, die zwei Mikrocontroller aufweist. Jeder der Mikrocontroller ist mit einer Treiberstufe gekoppelt, über die ein Relais betätigbar ist. Zur Überwachung des Schaltzustandes der Relais sind die Treiberstufen mit beiden Mikrocontrollern gekoppelt.

US 2013/233044 A1 (Arth Christophe et al.), 12. September 2013, welches als nächstliegender Stand der Technik angesehen wird, offenbart eine Sensoranordnung zum Detektieren eines sicheren Anlagenzustandes einer automatisiert betriebenen Anlage.

In vielen Anwendungen der Automatisierungstechnik besteht Bedarf an einer Schaltvorrichtung, die ein hohes Maß an Sicherheit bietet, bauraumsparend ist und mit einem Minimum an möglichst einfachen Komponenten herstellbar ist. Je höher die erreichte Sicherheitsstufe ist, umso komplexer und kostenintensiver sind Schaltvorrichtungen aus dem Stand der Technik. Der vorliegenden Erfindung liegt die Aufgabe zugrunde, eine Schaltvorrichtung bereitzustellen, die ein höchstmögliches Maß an Sicherheit bei gleichzeitig minimalem Bauaufwand, reduzierter Komponentenanzahl und minimalen Platzbedarf bietet und die Nachteile aus dem Stand der Technik überwindet.

Diese Aufgabenstellung wird durch die erfindungsgemäße Sicherheitsschaltvorrichtung gemäß Anspruch 1 gelöst. Die Sicherheitsschaltvorrichtung weist auf ihrer Steuerseite mindestens eine Ein-Fehler-Toleranz, also eine Hardware-Fehlertoleranz von mindestens Eins auf. Dadurch ist auch bei Versagen einer Komponente in der Sicherheitsschaltvorrichtung deren sichere Funktionsfähigkeit weiter gewährleistet. Die Sicherheitsschaltvorrichtung weist eine erste und eine zweite Steuereinheit auf, die jeweils dazu ausgebildet sind, einen Schaltbefehl, der beispielsweise über eine Kommunikationsleitung übermittelt wird, auszugeben, um diesen in eine Betätigung umzusetzen. Die Sicherheitsschaltvorrichtung weist auch mindestens eine Überwachungseinheit auf, die jeweils mit einem ersten und einem zweiten Verknüpfungselement versehen ist. Darüber hinaus sind die Verknüpfungselemente in der Überwachungseinheit über Rückkanäle mit den Steuereinheiten unmittelbar verbunden. Die Überwachungseinheit dient so der Überwachung der Tätigkeit der Steuereinheiten und die Steuereinheiten dienen zur Überwachung der Überwachungseinheit. Die Steuereinheiten und die Überwachungseinheit gehören zur Steuerseite der erfindungsgemäßen Sicherheitsschaltvorrichtung. Erfindungsgemäß ist das erste Verknüpfungselement über einen ersten Rückkanal mit der zweiten Steuereinheit verbunden. Das zweite Verknüpfungselement wiederum ist über einen zweiten Rückkanal mit der ersten Steuereinheit verbunden. Hierdurch erfolgt eine differenzierte Überwachung der eingesetzten Komponenten auf der Steuerseite, so dass ein hohes Maß an Betriebssicherheit erzielt wird.

Die Steuerseite wird durch die Betätigungsseite ergänzt, auf der mindestens zwei Schaltelemente angeordnet sind. Die Schaltelemente sind mit einem Lastkreis verbunden, der zu einer Anwendung, beispielsweise einer Stromversorgung eines Elektromotors gehört, und dazu ausgebildet, den Lastkreis zu unterbrechen. Über die Überwachungseinheit werden die von den Steuereinheiten ausgegebenen Schaltbefehle mindestens einem der mindestens zwei Schaltelemente zugeführt und in einen Schaltvorgang im Lastkreis umgesetzt. Erfindungsgemäß sind die Schaltelemente jeweils als Standard-Komponenten ausgebildet. Standard-Komponenten sind Bauformen elektromechanischer Komponenten, bei denen für die Kontakte, mit denen der Lastkreis unterbrechbar ist, keine Zwangsführung vorgesehen ist. In einer Standard-Komponente, wie z.B. einem Standardrelais, ohne zwangsgeführte Kontakte kann beim Auftritt eines Fehlers, beispielsweise einem Kontaktkleben, ein Zustand eintreten, in dem ein Öffner-Kontakt und ein Schließer-Kontakt gleichzeitig schließbar sind.

Standard-Komponenten, also Komponenten ohne zwangsgeführte Kontakte, weisen eine reduzierte Komplexität auf und erfordern weniger Bauraum als Schaltelemente mit zwangsgeführten Kontakten. Des Weiteren sind Standard-Komponenten kostengünstiger und bieten separat weniger Sicherheit als Schaltelemente mit zwangsgeführten Kontakten. Des Weiteren erfordert die Überwachungseinheit in der erfindungsgemäßen Sicherheitsschaltvorrichtung lediglich zwei Steuereinheiten und zwei Verknüpfungselemente. Hierdurch wird gegenüber den bekannten Lösungen eine erhebliche Einsparung an elektronischen Komponenten erzielt. Infolge der Bauraumersparnis ist die erfindungsgemäße Sicherheitsschaltvorrichtung wesentlich wirtschaftlicher und kompakter herstellbar und kann beispielsweise in ein einziges Gehäuse mit geringeren Abmessungen eingebaut werden als die bisher bekannten Lösungen. Ferner sind Standard-Komponenten kostengünstiger als Komponenten mit Kontaktzwangsführung, so dass eine kosteneffiziente Wartung der beanspruchten Sicherheitsschaltvorrichtung möglich ist. Gleichzeitig bietet die erfindungsgemäße Sicherheitsschaltvorrichtung gegenüber den bekannten Lösungen ein zumindest gleichbleibendes Maß an Sicherheit.

Vorzugsweise ist in der erfindungsgemäßen Sicherheitsschaltvorrichtung die erste Steuereinheit unmittelbar mit einem Basis-Anschluss des ersten Verknüpfungselements zu dessen Betätigung verbunden. Die Ansteuerung des ersten Verknüpfungselements durch die erste Steuereinheit wird somit mittels des ersten Rückkanals durch die zweite Steuereinheit überwacht. Wenn dabei durch die zweite Steuereinheit ein Fehler festgestellt wird, ist die zweite Steuereinheit zum Einleiten einer Gegenmaßnahme ausgebildet. Eine Gegenmaßnahme ist beispielsweise eine Betätigung des Basis-Anschlusses des zweiten Verknüpfungselements zur Herstellung eines sicheren Zustands auf der Betätigungsseite.

Alternativ oder ergänzend kann die zweite Steuereinheit unmittelbar mit einem Basis-Anschluss des zweiten Verknüpfungselements zu dessen Betätigung verbunden sein. Die Ansteuerung des zweiten Verknüpfungselements durch die zweite Steuereinheit wird somit mittels des zweiten Rückkanals durch die erste Steuereinheit überwacht. Wenn dabei durch die erste Steuereinheit ein Fehler festgestellt wird, ist die erste Steuereinheit zum Einleiten einer Gegenmaßnahme ausgebildet. Eine Gegenmaßnahme ist beispielsweise eine Betätigung des Basis-Anschlusses des ersten Verknüpfungselements zur Herstellung eines sicheren Zustands auf der Betätigungsseite. Hierdurch wird insgesamt eine zusätzliche Überwachung der Komponenten auf der Steuerseite gewährleistet. Diese zusätzliche Überwachung gewährleistet, dass die Steuerseite einen Diagnosedeckungsgrad von über 90%, insbesondere von 90% bis 99%, erreicht. Der Diagnosedeckungsgrad ist das Verhältnis von zwei Werten über einen Bezugszeitraum hinweg. Der erste Wert ist die Anzahl der erkannten gefährlichen Fehler, die im Bezugszeitraum eintraten. Der zweite Wert ist die Summe aus dem ersten Wert und der Anzahl der nicht erkannten gefährlichen Fehler im Bezugszeitraum. Der Diagnosedeckungsgrad ist der Quotient aus dem ersten und dem zweiten Wert und ist als Prozentwert darstellbar.

Folglich ist mit der erfindungsgemäßen Sicherheitsschaltvorrichtung eine Betriebssicherheit der Kategorie SIL 3 erreichbar. Die skizzierte zusätzliche Überwachung erfolgt durch ohnehin vorhandene Komponenten, so dass die Komplexität der Sicherheitsschaltvorrichtung und deren Bauaufwand minimiert sind.

In einer bevorzugten Ausführungsform der Erfindung weist die Betätigungsseite der Sicherheitsschaltvorrichtung mindestens eine Zwei-Fehler-Toleranz, also eine Hardware-Fehlertoleranz von mindestens Zwei, auf und/oder hat eine Safe-Failure-Fraction, kurz SFF, von mindestens 60%, bevorzugt von 70% bis 90%. Hierzu ist die Betätigungsseite mit mindestens drei Schaltelementen versehen, so dass bei einem Ausfall von zwei Schaltelementen zumindest ein drittes vorhanden ist, dass den Lastkreis unterbricht. Ferner sind die Schaltelemente derart ausgebildet, dass die Kombination deren einzelner Diagnosedeckungsgrade mindestens 60% betragen, vorzugsweise 70% bis 90%. Hierdurch wird mit einfachen und platzsparenden Schaltelementen, beispielsweise Standardrelais, weiterhin ein hohes Maß an Sicherheit erzielt. Die Betätigungsseite ist somit für Verwendungen mit einer erforderlichen Kategorisierung als SIL 3 oder SIL 4 geeignet, also auch für besonders sicherheitskritische Anwendungen. Insgesamt ist die erfindungsgemäße Sicherheitsschaltvorrichtung dazu geeignet, in einfacher, kompakter und kosteneffizienter Bauweise zumindest eine Kategorisierung als SIL 3-Gerät zu erzielen.

Weiter bevorzugt weist das erste und/oder zweite Verknüpfungselement jeweils einen Kollektor-Anschluss und einen Emitter-Anschluss auf. In Verbindung mit dem Basis-Anschluss wirkt das erste bzw. zweite Verknüpfungselement damit als Logik-Element. Bei einer anliegenden Betriebsspannung am Kollektor-Anschluss des ersten oder zweiten Verknüpfungselements dient die durch den Schaltbefehl ausgelöste Betätigung des Basis-Anschlusses dazu, einen Stromfluss durch den zugehörigen Emitter zu ermöglichen oder zu stoppen. Die im Bereich von Transistoren üblichen Begriffe Kollektor, Basis und Emitter sind beispielhaft zu verstehen. Sämtliche elektronischen Komponenten mit derselben technischen Schaltfunktionalität bilden Verknüpfungselemente im Sinne der Erfindung. Derartige Verknüpfungselemente sind in einfacher und schneller Weise verarbeitbar, bieten ein hohes Maß an Zuverlässigkeit und eine hohe Betätigungsgeschwindigkeit. Hierdurch können Gegenmaßnahmen, beispielweise ein Trennen des Lastkreises durch die Schaltelemente, schnell eingeleitet werden.

Darüber hinaus kann in der erfindungsgemäßen Sicherheitsschaltvorrichtung der erste Emitter-Anschluss, der zu dem ersten Verknüpfungselement gehört, unmittelbar mit dem zweiten Kollektor-Anschluss verbunden sein, der wiederum zu dem zweiten Verknüpfungselement gehört. Alternativ kann auch der erste Kollektor-Anschluss an dem ersten Verknüpfungselement mit dem zweiten Emitter-Anschluss des zweiten Verknüpfungselements unmittelbar verbunden sein. Eine solche unmittelbare Verbindung der Verknüpfungselemente über ihre Kollektor- und Emitter-Anschlüsse gewährleistet im Betrieb der Überwachungseinheit eine fehlerrobuste gegenseitige Erkennung von Fehlerzuständen beim Senden des Schaltbefehls an die Schaltelemente.

Das erste und/oder zweite Verknüpfungselement ist vorteilhafterweise jeweils als Transistor, Feldeffekttransistor, Thyristor, Triac, IGBT (IGBT = Insulated Gate Bipolar Transistor), Treiberbaustein, integrierter Schaltkreis oder als UND-Baustein ausgebildet. Diese Komponenten bieten für eine weite Spanne an Betriebsparametern, beispielsweise Stromstärke, Spannung, Temperaturbelastung, etc. ein hohes Maß an Zuverlässigkeit, Betätigungsgeschwindigkeit und minimale Verlustleistungen bei hoher Wirtschaftlichkeit. Durch ihr im Wesentlichen gleichartiges Funktionsprinzip ist die erfindungsgemäße Sicherheitsschaltvorrichtung an eine breite Spanne von Einsatzbereichen durch entsprechende Auswahl der Verknüpfungselemente anpassbar. Insbesondere erlaubt die beanspruchte Sicherheitsschaltvorrichtung eine einfache Skalierung an unterschiedlich hohe Ströme und Spannungen.

In der erfindungsgemäßen Sicherheitsschaltvorrichtung kann die Überwachungseinheit zusammen mit der ersten und/oder zweiten Steuereinheit auch als zusammenhängender ASIC ausgebildet seien. Ein ASIC (ASIC = Application Specific Integrated Circuit) bietet ein hohes Maß an Integration und gewährleistet eine besonders hohe Platzersparnis. Der ASIC verfügt vorzugsweise über eine Kommunikationsschnittstelle, die eine Kommunikation mit einer übergeordneten Steuerinstanz, beispielsweise einer Speicherprogrammierbaren Steuerung, kurz SPS, ermöglicht. Ferner sind ASICs bei der Herstellung automatisch vollständig auf ihre Funktionstüchtigkeit prüfbar. Hierdurch werden bei der Herstellung der erfindungsgemäßen Sicherheitsschaltvorrichtung die Anzahl der Arbeitsschritte, und damit an potentiellen Fehlerquellen, reduziert. Infolgedessen ist die beanspruchte Sicherheitsschaltvorrichtung mit einer minimalen Ausschussquote herstellbar.

In einer weiteren vorteilhaften Ausführung der Erfindung weist die Sicherheitsschaltvorrichtung mindestens zwei Überwachungseinheiten auf. Die Überwachungseinheiten sind jeweils mit der ersten und zweiten Steuereinheit verbunden und dazu ausgebildet, jeweils an mindestens ein zugeordnetes Schaltelement einen Schaltbefehl auszugeben. Die erste Überwachungseinheit ist mit einem ersten Schaltelement gekoppelt und die zweite Überwachungseinheit mit einem zweiten Schaltelement. Dies ermöglicht eine separate, und damit unabhängige Ansteuerung des ersten und zweiten Schaltelements. Insbesondere ist die Sicherheitsschaltvorrichtung zu einem einstellbaren zeitlich gestaffelten Betätigen der Schaltelemente ausgebildet. Die Überwachungseinheiten sind dabei vorzugsweise gleich aufgebaut, also mit zwei Verknüpfungselementen, deren Basis-Anschlüsse jeweils durch die erste und zweite Steuereinheit betätigt werden. In jeder der Überwachungseinheiten ist der Emitter-Anschluss des ersten Verknüpfungselements über einen ersten Rückkanal mit der zweiten Steuereinheit unmittelbar verbunden. Gleichermaßen ist in jeder der Überwachungseinheiten der Emitter-Anschluss des zweiten Verknüpfungselements über einen zweiten Rückkanal mit der ersten Steuereinheit unmittelbar verbunden. Durch die einstellbare zeitlich gestaffelte Betätigung ist ein gezielter Kontaktabbrand in den Schaltelementen einstellbar. Der auftretende Kontaktabbrand ist in einem einzelnen Schaltelement konzentrierbar oder wählbar auf mehrere Schaltelemente verteilbar. Infolge der räumlichen Kompaktheit der erfindungsgemäßen Lösung kann durch eine Mehrzahl an Überwachungseinheiten, die mit den Steuereinheiten in einem gemeinsamen Gehäuse aufgenommen sind, eine hochgradig parallelisierte Sicherheitsschaltvorrichtung mit hoher Redundanz, und damit Zuverlässigkeit, bereitgestellt werden. Durch die kosteneffiziente Bauweise der Überwachungseinheiten wird die Wirtschaftlichkeit der erfindungsgemäßen Lösung weiter gesteigert.

Alternativ können die mindestens zwei Schaltelemente auch über eine gemeinsame Signalleitung mit der Überwachungseinheit verbunden seien. Ein Schaltbefehl von den Steuereinheiten wird darin als ein einziges Signal zur Betätigung der Schaltelemente weitergegeben. Eine gemeinsame Signalleitung erlaubt es, den Verdrahtungsaufwand auch bei einer hohen Anzahl an Schaltelementen zu minimieren. Ferner sind auch bei zahlreichen Schaltelementen nur zwei Übergangpunkte zwischen der Steuerseite und der Betätigungsseite notwendig. Besonders bevorzugt ist die erfindungsgemäße Sicherheitsschaltvorrichtung in Modulbauweise ausgebildet. Dabei sind die Komponenten der Steuerseite jeweils als Modul in einem ersten Gehäuse aufgenommen und die Komponenten der Betätigungsseite in einem zweiten Gehäuse. Dabei definiert die Anzahl an Übergangspunkten zwischen der Steuerseite und der Betätigungsseite, wie viele elektrische Verbindungen, beispielsweise in Form von Pins, zum bestimmungsgemäßen Betrieb nötig sind. Eine geringe notwendige Anzahl an elektrischen Verbindungen zwischen der Steuerseite und der Betätigungsseite reduziert die Komplexität der Modulkopplung und erhöht damit deren Robustheit. Die erfindungsgemäße Sicherheitsschaltvorrichtung ist durch Auswahl elektrisch geeignet dimensionierter Module flexibel und bietet gleichzeitig ein erhebliches Maß an Robustheit.

Besonders bevorzugt sind die mindestens zwei Schaltelemente jeweils als Relais, Hilfsschütz, Hauptschütz oder als elektromagnetisches Ventil ausgebildet. Derartige Schaltelemente decken eine weite Spanne von Stromstärken und Spannungen im Lastkreis ab, so dass die erfindungsgemäße Sicherheitsschaltvorrichtung im Wesentlichen gleichartig für sämtliche Formen von Lastkreisen geeignet ist. Die Steuerseite der erfindungsgemäßen Sicherheitsschaltvorrichtung weist hierzu einen geeigneten universellen Aufbau auf.

Des Weiteren können in der erfindungsgemäßen Sicherheitsschaltvorrichtung die mindestens zwei Schaltelemente diversitär, als typenverschieden, ausgebildet seien. Eine diversitäre Betätigungsseite weist einen reduzierten Beta-Faktor auf. Durch diesen wird die Neigung zum gehäuften Eintreten von Fehlern in identischen Komponenten dargestellt. Derartige Fehler werden auch Fehler gemeinsamer Ursache oder Common-Cause-Fehler genannt. Folglich ist die erfindungsgemäße Sicherheitsschaltvorrichtung dazu ausgebildet, auch Störeinwirkungen standzuhalten, die unweigerlich zur Zerstörung von einzelnen Komponenten führen. Die Diversität kann beispielsweise in einer unterschiedlich starken Sicherung gegen Überlastströme, beispielsweise infolge von Kurzschlüssen, bestehen. Hierdurch wird die erzielbare Sicherheit weiter gesteigert.

Weiter bevorzugt können die erste und zweite Steuereinheit in der erfindungsgemäßen Sicherheitsschaltvorrichtung zur gegenseitigen Diagnose unmittelbar miteinander verbunden sein. Die Diagnoseverbindung zwischen den Steuereinheiten ist dazu ausgebildet, ein Signal zu transportieren, dass für den Zustand der absendenden Steuereinheit charakteristisch ist. Die Diagnoseleitung ist auch dazu ausgebildet, einen Befehl von einer Steuereinheit zur anderen zu transportieren, insbesondere einen Abschaltbefehl. Den möglichen Folgen eines Funktionsfehlers einer der beiden Steuereinheiten kann so vor dem Eintreten weitergehender Schäden entgegengewirkt werden. Die abschaltende Steuereinheit ist auch dazu ausgebildet, nach einem Abschaltbefehl an die andere Steuereinheit diesen nicht bestimmungsgemäßen Zustand in Form einer Fehlermeldung an einen Benutzer oder eine übergeordnete Controller-Einheit zu melden. Hierdurch wird bei gleichbleibender Komponentenanzahl eine weitere Überwachung innerhalb der erfindungsgemäßen Sicherheitsschaltvorrichtung bereitgestellt, die die erzielbare Betriebssicherheit steigert.

Die zugrundeliegende Aufgabenstellung wird auch durch das erfindungsgemäße sicherheitsgerichtete Gerät gelöst. Das sicherheitsgerichtete Gerät ist beispielsweise als Sicherheitsschaltgerät, als sicheres Koppelrelais, als sichere Relaisbaugruppe, als sicherer SPS-Relaisausgang, oder als Sicherheitsmodul in einer SPS ausgebildet. Das sicherheitsgerichtete Gerät ist dabei mit einer der oben beschriebenen Sicherheitsschaltvorrichtung versehen, die die erforderlichen Sicherheitsfunktionen bereitstellt. Infolge der kompakten Sicherheitsschaltvorrichtung weist das sicherheitsgerichtete Gerät geringe Abmessungen auf. Alternativ kann im Gehäuse des sicherheitsgerichteten Geräts lediglich die Steuerseite der erfindungsgemäßen Sicherheitsschaltvorrichtung aufgenommen seien. Dabei sind am Gehäuse des sicherheitsgerichteten Geräts Anschlüsse vorgesehen, die eine Kopplung mit einem separaten Modul erlauben, in dem die Betätigungsseite der Sicherheitsschaltvorrichtung aufgenommen ist. Das erfindungsgemäße sicherheitsgerichtete Gerät ist vorzugsweise als SIL 2-, SIL 3- oder SIL 4-Gerät ausgebildet.

Die Erfindung wird im Folgenden anhand der Ausführungsformen in den Figuren 1 bis 5 näher erläutert. Es zeigen im Einzelnen
- FIG 1: schematisch den Aufbau einer ersten Ausführungsform der erfindungsgemäßen Sicherheitsschaltvorrichtung;
- FIG 2: schematisch den Aufbau einer zweiten Ausführungsform der erfindungsgemäßen Sicherheitsschaltvorrichtung;
- FIG 3: schematisch den Aufbau einer dritten Ausführungsform der erfindungsgemäßen Sicherheitsschaltvorrichtung;
- FIG 4: schematisch den Aufbau einer vierten Ausführungsform der erfindungsgemäßen Sicherheitsschaltvorrichtung;
- FIG 5: schematisch die Kontakte eines als Standardkomponente ausgebildeten Schaltelements.

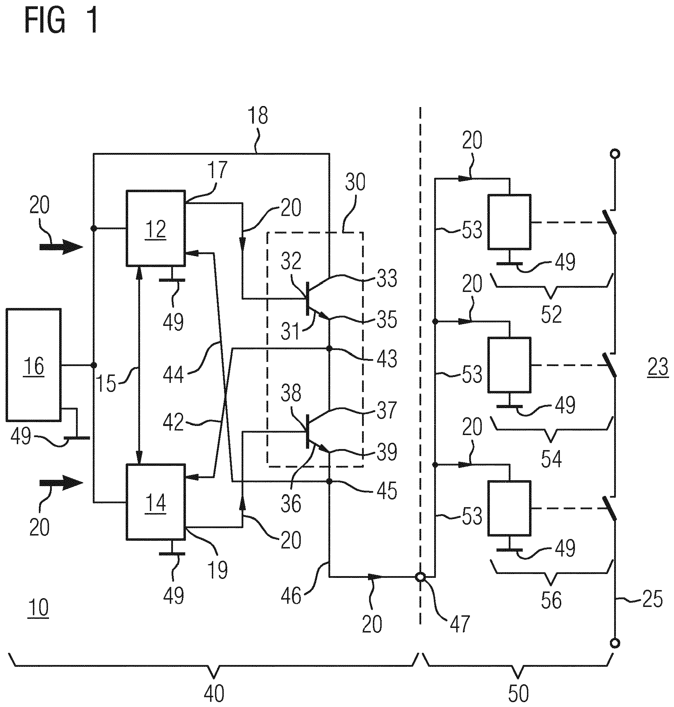

In FIG 1 ist eine erste Ausführungsform der erfindungsgemäßen Sicherheitsschaltvorrichtung 10 dargestellt, die im Wesentlichen in eine Steuerseite 40 und eine Betätigungsseite 50 gegliedert ist. Auf der Steuerseite 40 ist eine Spannungsversorgung 16 angeordnet, die zur Stromversorgung der Komponenten auf der Steuerseite 40 dient. Die Spannungsversorgung 16 stellt eine Betriebsspannung 18 für eine erste und zweite Steuereinheit 12, 14 und eine Überwachungseinheit 30 bereit. Die Steuereinheiten 12, 14 und das Netzteil 16 sind jeweils mit einem Masse-Anschluss 49 verbunden. Über eine nicht näher dargestellte Steuerleitung werden Schaltbefehle 20 an die erste und eine zweite Steuereinheit 12, 14 ausgegeben, die von diesen in einen Schaltvorgang auf der Betätigungsseite 50 umgesetzt werden. Die Schaltbefehle 20 erreichen die Steuereinheiten 12, 14 über deren nicht näher dargestellte Signaleingänge. Die Überwachungseinheit 30 umfasst eine erstes und ein zweites Verknüpfungselement 31, 36, die als Transistoren ausgebildet sind und in Reihe geschaltet sind. An einem ersten Kollektor-Anschluss 33 liegt die Betriebsspannung 18 an. Ein erster Basis-Anschluss 32 der ersten Verknüpfungseinheit 31 ist mit einem Ausgang 17 der ersten Steuereinheit 12 verbunden. Der Schaltbefehl 20 wird von der ersten Steuereinheit 12 als Betätigung des ersten Basis-Anschlusses 32 in der ersten Verknüpfungselement 31 ausgegeben. Bei einer entsprechenden Betätigung am ersten Basis-Anschluss 32 erlaubt das erste Verknüpfungselement 31 einen Stromfluss durch einen ersten Emitter-Anschluss 35. Ferner liegt im Bereich des ersten Emitter-Anschlusses 35 der zweite Kollektor-Anschluss 37 des zweiten Verknüpfungselements 36 und dazwischen eine erste Verzweigung 43, von der ein erster Rückkanal 42 abzweigt. Der erste Rückkanal 42 wiederum führt zur zweiten Steuereinheit 14. Über den ersten Rückkanal 42 wird der Schaltzustand des ersten Verknüpfungselements 31 an die zweite Steuereinheit 14 gemeldet. Die zweite Steuereinheit 14 ist dazu ausgebildet, den Eingang des Rückkanals mit dem an der zweiten Steuereinheit 14 vorliegenden Schaltbefehls 20 abzugleichen und so einen bestimmungsgemäßen Schaltzustand am erste Verknüpfungselement 31 zu verifizieren oder einen fehlerhaften Schaltzustand zu identifizieren.

Analog zur ersten Steuereinheit 12 wird der Schaltbefehl 20 von der zweiten Steuereinheit 14 über deren Ausgang 19 an den zweiten Basis-Anschluss 38 des zweiten Verknüpfungselements 36 ausgegeben. Durch die entsprechende Betätigung des zweiten Basis-Anschlusses 38 erlaubt das zweite Verknüpfungselement 36 einen Stromfluss über einen zweiten Emitter-Anschluss 39. Der Stromfluss vom zweiten Emitter-Anschluss 39 zum Kopplungspunkt 47 erfolgt über einen Signalausgang 46. Ein vorliegender Stromfluss im Signalausgang 46 bildet den vorliegenden Schaltbefehl 20 an die Betätigungsseite 50 ab. Zwischen dem Kopplungspunkt 47 und dem zweiten Emitter-Anschluss 39 ist eine zweite Verzweigung 45 angeordnet, von der ein zweiter Rückkanal 44 zur ersten Steuereinheit 12 führt. Das über den zweiten Rückkanal 44 zur ersten Steuereinheit 12 geführt Signal stellt den Schaltzustand des zweiten Verknüpfungselements 36 dar. Die erste Steuereinheit 12 ist dazu ausgebildet, das über den zweiten Rückkanal 44 transportierte Signal mit dem vorliegenden Schaltbefehl 20 abzugleichen. Hierdurch ist die erste Steuereinheit 12 dazu ausgebildet, einen bestimmungsgemäßen Schaltzustand am zweiten Verknüpfungselement 36 zu verifizieren oder einen fehlerhaften Schaltzustand zu identifizieren.

Wenn die durch die erste Steuereinheit 12 ein fehlerhafter Schaltzustand am zweiten Verknüpfungselement 36 erkannt wird, ist die erste Steuereinheit 12 dazu ausgebildet, durch eine entsprechende Betätigung am ersten Basis-Anschluss 32 der ersten Verknüpfungseinheit 31 den Stromfluss zum ersten Emitter-Anschluss 35 zu unterbinden. Dadurch wird ein weiterer Betrieb auf Basis eines fehlerhaften Schaltbefehls 20 oder eines Hardwaredefekts in der Sicherheitsschaltvorrichtung 10 verhindert. Gleichermaßen ist die zweite Steuereinheit 14 dazu ausgebildet, bei Erkennung eines fehlerhaften Schaltzustands am ersten Verknüpfungselement 31 durch Betätigung des zweiten Basis-Anschlusses 38 den Stromfluss zum zweiten Emitter-Anschluss 39 zu unterbinden.

In der erfindungsgemäßen Sicherheitsschaltvorrichtung wird so auf der Steuerseite 40 mindestens eine Ein-Fehler-Toleranz, auch Hardware-Fehlertoleranz von Eins genannt, verwirklicht. Über die Verknüpfungselemente 31, 36 der Überwachungseinheit wird zwischen den Steuereinheiten 12, 14 eine indirekte Überkreuz-Überwachung ausgebildet. Ferner sind die erste und zweite Steuereinheit 12, 14 unmittelbar über eine Diagnoseleitung 15 miteinander verbunden. Die Diagnoseleitung umfasst auch eine Ansteuerleitung, die ein gegenseitiges Abschalten der Steuereinheiten ermöglicht. Hierdurch wird eine direkte gegenseitige Überwachung verwirklicht, so dass durch die Kombination mit der indirekten Überkreuz-Überwachung ein besonders hohes Maß an Sicherheit auf der Steuerseite 40 erzielt wird. Insbesondere wird auf der Steuerseite 40 bei einem vorliegenden Hardwarefehler einen Diagnosedeckungsgrad von 90% bis 99% erzielt.

Die Verbindung zwischen der Steuerseite 40 und der Betätigungsseite 50 erfolgt über den Kopplungspunkt 47. Auf der Betätigungsseite 50 sind ein erstes, ein zweites und ein drittes Schaltelement 52, 54, 56 angeordnet, die als Standardrelais ausgebildet sind. Die Schaltelemente 52, 54, 56 sind jeweils dazu ausgebildet, eine Leitung 25 eines nicht näher dargestellten Lastkreises 23 zu unterbrechen. Die Schaltelement 52, 54, 56 sind an eine gemeinsame Signalleitung 53 angeschlossen, über die der Schaltbefehl 20 bei entsprechender Betätigung und Funktionstüchtigkeit der Komponenten auf der Steuerseite 40 an die Schaltelemente 52, 54, 56 ausgeben wird. Die Schaltelemente 52, 54, 56 sind jeweils an mit einem Masse-Anschluss 49 verbunden, über den der Schaltbefehl 20 abgeleitet wird. Hierdurch wird in jedem der Schaltelemente 52, 54, 56 eine pp-Schaltung verwirklicht. Die Reihenschaltung der Schaltelemente 52, 54, 56 gewährleistet auch bei Vorliegen von zwei Hardware-Fehlern auf der Betätigungsseite 50 noch ein sicheres Trennen der Leitung 25 des Lastkreises 23. Insgesamt weist die Betätigungsseite 50 mindestens eine Zwei-Fehler-Toleranz, auch als Hardware-Fehlertoleranz von Zwei bezeichnet, auf. Mindestens zwei der Schaltelemente 52, 54, 56 sind diversitär, als bautypenfremd ausgebildet, so dass die Fehlertoleranz der Betätigungsseite 50 weiter gesteigert ist. Die Betätigungsseite 50 erreicht bei einem Vorliegen von zwei Hardware-Fehlern eine Safe-Failure-Fraction von mindestens 60%, insbesondere von 70% bis 90%.

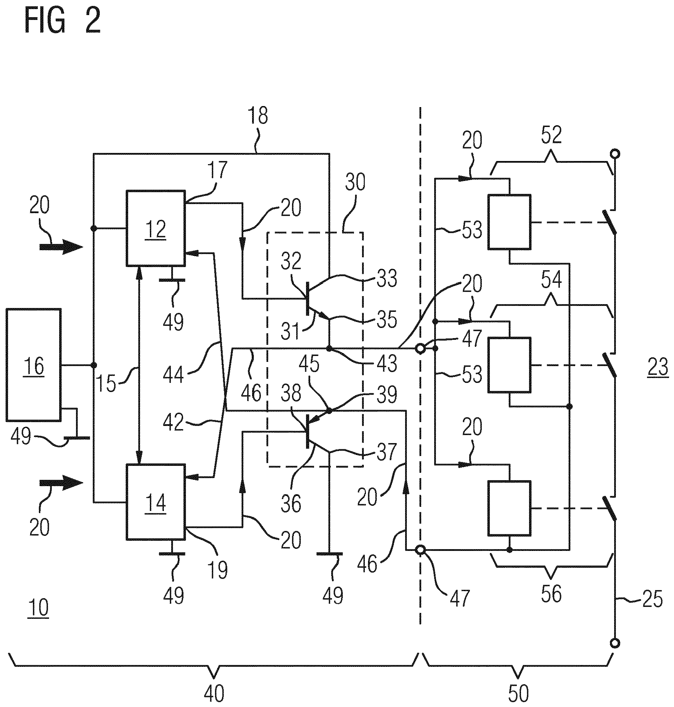

In FIG 2 ist eine zweite Ausführungsform der erfindungsgemäßen Sicherheitsschaltvorrichtung 10 dargestellt, die im Wesentlichen in eine Steuerseite 40 und eine Betätigungsseite 50 gegliedert ist. Auf der Steuerseite 40 ist eine Spannungsversorgung 16 angeordnet, die zur Stromversorgung der Komponenten auf der Steuerseite 40 dient. Die Spannungsversorgung 16 stellt eine Betriebsspannung 18 für eine erste und zweite Steuereinheit 12, 14 und eine Überwachungseinheit 30 bereit. Die Steuereinheiten 12, 14 und das Netzteil 16 sind jeweils mit einem Masse-Anschluss 49 verbunden. Über eine nicht näher dargestellte Steuerleitung werden Schaltbefehle 20 an die erste und eine zweite Steuereinheit 12, 14 ausgegeben, die von diesen in einen Schaltvorgang auf der Betätigungsseite 50 umgesetzt werden. Die Schaltbefehle 20 erreichen die Steuereinheiten 12, 14 über nicht näher abgebildete Signaleingänge. Die Überwachungseinheit 30 umfasst eine erstes und ein zweites Verknüpfungselement 31, 36, die als Transistoren ausgebildet sind. An einem ersten Kollektor-Anschluss 33 liegt die Betriebsspannung 18 an. Ein erster Basis-Anschluss 32 der ersten Verknüpfungseinheit 31 ist mit einem Ausgang 17 der ersten Steuereinheit 12 verbunden. Der Schaltbefehl 20 wird von der ersten Steuereinheit 12 als Betätigung des ersten Basis-Anschlusses 32 in der ersten Verknüpfungselement 31 ausgegeben. Bei einer entsprechenden Betätigung am ersten Basis-Anschluss 32 erlaubt das erste Verknüpfungselement 31 einen Stromfluss durch einen ersten Emitter-Anschluss 35. Ferner liegt im Bereich des ersten Emitter-Anschlusses 35 eine erste Verzweigung 43, die zu einem Kopplungspunkt 47 zur Betätigungsseite führt und von der ein erster Rückkanal 42 abzweigt. Der erste Rückkanal 42 wiederum führt zur zweiten Steuereinheit 14. Über den ersten Rückkanal 42 wird der Schaltzustand des ersten Verknüpfungselements 31 an die zweite Steuereinheit 14 gemeldet. Die zweite Steuereinheit 14 ist dazu ausgebildet, das Signal des Rückkanals 42 mit dem an der zweiten Steuereinheit 14 vorliegenden Schaltbefehls 20 abzugleichen und so einen bestimmungsgemäßen Schaltzustand am erste Verknüpfungselement 31 zu verifizieren oder einen fehlerhaften Schaltzustand zu identifizieren.

Der Schaltbefehl 20 wird über die Betätigungsseite 40 über einen weiteren Kopplungspunkt 47 zu einer zweiten Verzweigung 45 rückgeführt. Die zweite Verzweigung 45 führt zu einem zweiten Emitter-Anschluss 39 der zweiten Verknüpfungseinheit 36.

Analog zur ersten Steuereinheit 12 wird der Schaltbefehl 20 von der zweiten Steuereinheit 14 über deren Ausgang 19 an den zweiten Basis-Anschluss 38 des zweiten Verknüpfungselements 36 ausgegeben. Durch die entsprechende Betätigung des zweiten Basis-Anschlusses 38 erlaubt das zweite Verknüpfungselement 36 einen Stromfluss zwischen dem zweiten Emitter-Anschluss 39 und dem mit einem Masse-Anschluss 49 verbundenen zweiten Kollektor-Anschlusses 37. Der Stromfluss vom Kopplungspunkt 47 zur zweiten Verzweigung 45 über den zweiten Emitter-Anschluss 39 erfolgt über einen Signalausgang 46. Ein vorliegender Stromfluss im Signalausgang 46 bildet den vorliegenden Schaltbefehl 20 an die Betätigungsseite 50 ab. Zwischen dem Kopplungspunkt 47 und dem zweiten Emitter-Anschluss 39 ist die zweite Verzweigung 45 angeordnet, von der ein zweiter Rückkanal 44 zur ersten Steuereinheit 12 führt. Das über den zweiten Rückkanal 44 zur ersten Steuereinheit 12 geführt Signal stellt den Schaltzustand des zweiten Verknüpfungselements 36 dar. Die erste Steuereinheit 12 ist dazu ausgebildet, das über den zweiten Rückkanal 44 transportierte Signal mit dem vorliegenden Schaltbefehl 20 abzugleichen. Hierdurch ist die erste Steuereinheit 12 dazu ausgebildet, einen bestimmungsgemäßen Schaltzustand am zweiten Verknüpfungselement 36 zu verifizieren oder einen fehlerhaften Schaltzustand zu identifizieren.

Wenn durch die erste Steuereinheit 12 ein fehlerhafter Schaltzustand am zweiten Verknüpfungselement 36 erkannt wird, ist die erste Steuereinheit 12 dazu ausgebildet, durch eine entsprechende Betätigung am ersten Basis-Anschluss 32 der ersten Verknüpfungseinheit 31 den Stromfluss zum ersten Emitter-Anschluss 35 zu unterbinden. Dadurch wird ein weiterer Betrieb auf Basis eines fehlerhaften Schaltbefehls 20 oder eines Hardwaredefekts in der Sicherheitsschaltvorrichtung 10 verhindert. Gleichermaßen ist die zweite Steuereinheit 14 dazu ausgebildet, bei Erkennung eines fehlerhaften Schaltzustands am ersten Verknüpfungselement 31 durch Betätigung des zweiten Basis-Anschlusses 38 den Stromfluss zum zweiten Emitter-Anschluss 39 zu unterbinden.

In der erfindungsgemäßen Sicherheitsschaltvorrichtung wird so auf der Steuerseite 40 mindestens eine Ein-Fehler-Toleranz, auch Hardware-Fehlertoleranz von Eins genannt, verwirklicht. Über die Verknüpfungselemente 31, 36 der Überwachungseinheit wird zwischen den Steuereinheiten 12, 14 eine indirekte Überkreuz-Überwachung ausgebildet. Ferner sind die erste und zweite Steuereinheit 12, 14 unmittelbar über eine Diagnoseleitung 15 miteinander verbunden. Die Diagnoseleitung umfasst auch eine Ansteuerleitung, die ein gegenseitiges Abschalten der Steuereinheiten ermöglicht. Hierdurch wird eine direkte gegenseitige Überwachung verwirklicht, so dass durch die Kombination mit der indirekten Überkreuz-Überwachung ein besonders hohes Maß an Sicherheit auf der Steuerseite 40 erzielt wird. Insbesondere wird auf der Steuerseite 40 bei einem vorliegenden Hardwarefehler einen Diagnosedeckungsgrad von 90% bis 99% erzielt.

Die Verbindung zwischen der Steuerseite 40 und der Betätigungsseite 50 erfolgt über die Kopplungspunkte 47. Die Verbindung zwischen der Steuerseite 40 und der Betätigungsseite 50 über zwei Kopplungspunkte 47 verwirklicht an den Schaltelementen 52, 54, 56 jeweils eine pm-Schaltung. Auf der Betätigungsseite 50 sind ein erstes, ein zweites und ein drittes Schaltelement 52, 54, 56 angeordnet, die als Standardrelais ausgebildet sind. Die Schaltelemente 52, 54, 56 sind jeweils dazu ausgebildet, eine Leitung 25 eines nicht näher dargestellten Lastkreises 23 zu unterbrechen. Die Schaltelement 52, 54, 56 sind an eine gemeinsame Signalleitung 53 angeschlossen, über die der Schaltbefehl 20 bei entsprechender Betätigung und Funktionstüchtigkeit der Komponenten auf der Steuerseite 40 an die Schaltelemente 52, 54, 56 ausgeben wird. Die Parallelschaltung der Schaltelemente 52, 54, 56 gewährleistet auch bei Vorliegen von zwei Hardware-Fehlern auf der Betätigungsseite 50 noch ein sicheres Trennen der Leitung 25 des Lastkreises 23. Insgesamt weist die Betätigungsseite 50 mindestens eine Zwei-Fehler-Toleranz, auch als Hardware-Fehlertoleranz von Zwei bezeichnet, auf. Mindestens zwei der Schaltelemente 52, 54, 56 sind diversitär, als bautypenfremd ausgebildet, so dass die Fehlertoleranz der Betätigungsseite 50 weiter gesteigert ist. Die Betätigungsseite 50 erreicht bei einem Vorliegen von zwei Hardware-Fehlern eine Safe-Failure-Fraction SFF von mindestens 60%, insbesondere von 70% bis 90%.

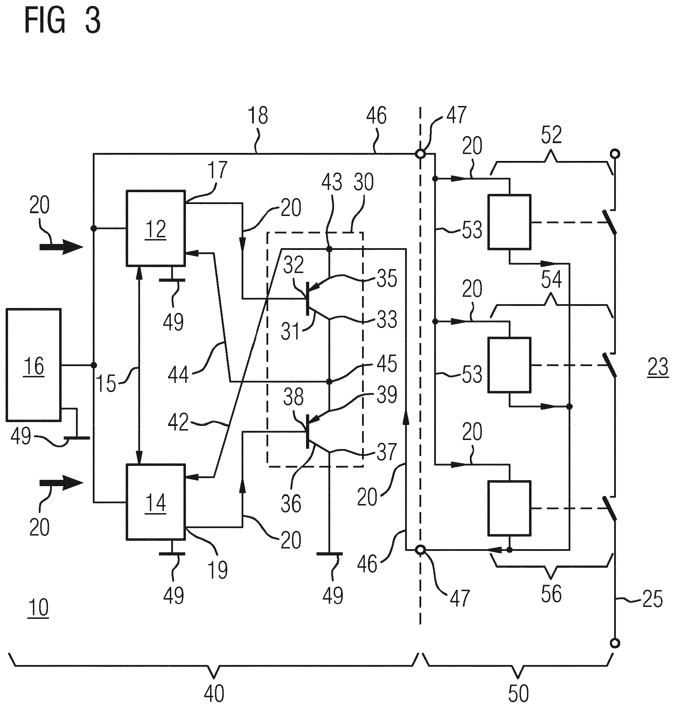

In FIG 3 ist eine dritte Ausführungsform der erfindungsgemäßen Sicherheitsschaltvorrichtung 10 dargestellt, die im Wesentlichen in eine Steuerseite 40 und eine Betätigungsseite 50 gegliedert ist. Auf der Steuerseite 40 ist eine Spannungsversorgung 16 angeordnet, die zur Stromversorgung der Komponenten auf der Steuerseite 40 dient. Die Spannungsversorgung 16 stellt eine Betriebsspannung 18 für eine erste und zweite Steuereinheit 12, 14 und Schaltelemente 52, 54, 56 auf der Betätigungsseite 50 bereit. Die Steuereinheiten 12, 14 und das Netzteil 16 sind jeweils mit einem Masse-Anschluss 49 verbunden. Über eine nicht näher dargestellte Steuerleitung werden Schaltbefehle 20 an die erste und eine zweite Steuereinheit 12, 14 ausgegeben, die von diesen in einen Schaltvorgang auf der Betätigungsseite 50 umgesetzt werden. Die Schaltbefehle 20 erreichen die Steuereinheiten 12, 14 über nicht näher abgebildete Signaleingänge. Die Überwachungseinheit 30 umfasst eine erstes und ein zweites Verknüpfungselement 31, 36, die als Transistoren ausgebildet sind und in Reihe geschaltet sind. Ein erster Kollektor-Anschluss 33 des ersten Verknüpfungselements 31 ist mit einem zweiten Emitter-Anschluss 39 des zweiten Verknüpfungselements 36 gekoppelt. Dazwischen liegt eine zweite Verzweigung 45, von der ein zweiter Rückkanal 44 zur ersten Steuereinheit 12 abzweigt. Ein erster Basis-Anschluss 32 der ersten Verknüpfungseinheit 31 ist mit einem Ausgang 17 der ersten Steuereinheit 12 verbunden. Der Schaltbefehl 20 wird von der ersten Steuereinheit 12 als Betätigung des ersten Basis-Anschlusses 32 in der ersten Verknüpfungselement 31 ausgegeben. Bei einer entsprechenden Betätigung am ersten Basis-Anschluss 32 erlaubt das erste Verknüpfungselement 31 einen Stromfluss von einem Kopplungspunkt 47 zu dem ersten Emitter-Anschluss 35 und dem ersten Kollektor-Anschluss 33. Ferner liegt im Bereich des ersten Emitter-Anschlusses 35 eine erste Verzweigung 43, von der ein erster Rückkanal 42 abzweigt. Der erste Rückkanal 42 wiederum führt zur zweiten Steuereinheit 14. Über den ersten Rückkanal 42 wird der Schaltzustand des ersten Verknüpfungselements 31 an die zweite Steuereinheit 14 gemeldet. Die zweite Steuereinheit 14 ist dazu ausgebildet, den Eingang des Rückkanals mit dem an der zweiten Steuereinheit 14 vorliegenden Schaltbefehls 20 abzugleichen und so einen bestimmungsgemäßen Schaltzustand am erste Verknüpfungselement 31 zu verifizieren oder einen fehlerhaften Schaltzustand zu identifizieren.

Analog zur ersten Steuereinheit 12 wird der Schaltbefehl 20 von der zweiten Steuereinheit 14 über deren Ausgang 19 an den zweiten Basis-Anschluss 38 des zweiten Verknüpfungselements 36 ausgegeben. Durch die entsprechende Betätigung des zweiten Basis-Anschlusses 38 erlaubt das zweite Verknüpfungselement 36 einen Stromfluss über einen zweiten Emitter-Anschluss 39 zu einem zweiten Kollektor-Anschluss 37. Der Stromfluss vom Kopplungspunkt 47 über den zweiten Emitter-Anschluss 39 zum Masseanschluss 49 erfolgt über einen Signalausgang 46. Ein vorliegender Stromfluss im Signalausgang 46 bildet den vorliegenden Schaltbefehl 20 an die Betätigungsseite 50 ab. Zwischen dem Kopplungspunkt 47 und dem zweiten Emitter-Anschluss 39 ist eine zweite Verzweigung 45 angeordnet, von der ein zweiter Rückkanal 44 zur ersten Steuereinheit 12 führt. Das über den zweiten Rückkanal 44 zur ersten Steuereinheit 12 geführte Signal stellt den Schaltzustand des zweiten Verknüpfungselements 36 dar. Die erste Steuereinheit 12 ist dazu ausgebildet, das über den zweiten Rückkanal 44 transportierte Signal mit dem vorliegenden Schaltbefehl 20 abzugleichen. Hierdurch ist die erste Steuereinheit 12 dazu ausgebildet, einen bestimmungsgemäßen Schaltzustand am zweiten Verknüpfungselement 36 zu verifizieren oder einen fehlerhaften Schaltzustand zu identifizieren.

Wenn durch die erste Steuereinheit 12 ein fehlerhafter Schaltzustand am zweiten Verknüpfungselement 36 erkannt wird, ist die erste Steuereinheit 12 dazu ausgebildet, durch eine entsprechende Betätigung am ersten Basis-Anschluss 32 der ersten Verknüpfungseinheit 31 den Stromfluss zum ersten Emitter-Anschluss 35 zu unterbinden. Dadurch wird ein weiterer Betrieb auf Grundlage eines fehlerhaften Schaltbefehls 20 oder eines Hardwaredefekts in der Sicherheitsschaltvorrichtung 10 verhindert. Gleichermaßen ist die zweite Steuereinheit 14 dazu ausgebildet, bei Erkennung eines fehlerhaften Schaltzustands am ersten Verknüpfungselement 31 durch Betätigung des zweiten Basis-Anschlusses 38 den Stromfluss zum zweiten Kollektor-Anschluss 37 zu unterbinden.

In der erfindungsgemäßen Sicherheitsschaltvorrichtung wird so auf der Steuerseite 40 mindestens eine Ein-Fehler-Toleranz, auch Hardware-Fehlertoleranz von Eins genannt, verwirklicht. Über die Verknüpfungselemente 31, 36 der Überwachungseinheit wird zwischen den Steuereinheiten 12, 14 eine indirekte Überkreuz-Überwachung ausgebildet. Ferner sind die erste und zweite Steuereinheit 12, 14 unmittelbar über eine Diagnoseleitung 15 miteinander verbunden. Die Diagnoseleitung umfasst auch eine Ansteuerleitung, die ein gegenseitiges Abschalten der Steuereinheiten ermöglicht. Hierdurch wird eine direkte gegenseitige Überwachung verwirklicht, so dass durch die Kombination mit der indirekten Überkreuz-Überwachung ein besonders hohes Maß an Sicherheit auf der Steuerseite 40 erzielt wird. Insbesondere wird auf der Steuerseite 40 bei einem vorliegenden Hardwarefehler einen Diagnosedeckungsgrad von 90% bis 99% erzielt.

Die Verbindung zwischen der Steuerseite 40 und der Betätigungsseite 50 erfolgt über den Kopplungspunkt 47. Auf der Betätigungsseite 50 sind ein erstes, ein zweites und ein drittes Schaltelement 52, 54, 56 angeordnet, die als Standardrelais ausgebildet sind. Die Schaltelemente 52, 54, 56 sind jeweils dazu ausgebildet, eine Leitung 25 eines nicht näher dargestellten Lastkreises 23 zu unterbrechen. Die Schaltelement 52, 54, 56 sind an eine gemeinsame Signalleitung 53 angeschlossen, über die der Schaltbefehl 20 bei entsprechender Betätigung und Funktionstüchtigkeit der Komponenten auf der Steuerseite 40 an die Schaltelemente 52, 54, 56 ausgeben wird. Die Schaltelemente 52, 54, 56 sind über den Kopplungspunkt 47, an dem die Betriebsspannung 18 anliegt mit einer gemeinsamen Signalleitung 53 jeweils mit der Steuerseite 40 verbunden. Ferner sind die Schaltelemente 52, 54, 56 auch über den weiteren Kopplungspunkt 47, der zur Überwachungseinheit 30 führt, mit der Steuerseite 40 verbunden. Hierdurch wird in jedem der Schaltelemente 52, 54, 56 eine mm-Schaltung verwirklicht. Die Parallelschaltung der Schaltelemente 52, 54, 56 gewährleistet auch bei Vorliegen von zwei Hardware-Fehlern auf der Betätigungsseite 50 noch ein sicheres Trennen der Leitung 25 des Lastkreises 23. Insgesamt weist die Betätigungsseite 50 mindestens eine Zwei-Fehler-Toleranz, auch als Hardware-Fehlertoleranz von Zwei bezeichnet, auf. Mindestens zwei der Schaltelemente 52, 54, 56 sind diversitär, also bautypenfremd ausgebildet, so dass die Fehlertoleranz der Betätigungsseite 50 weiter gesteigert ist. Die Betätigungsseite 50 erreicht bei einem Vorliegen von zwei Hardware-Fehlern eine Safe-Failure-Fraction SFF von 60%, insbesondere von 70% bis 90%.

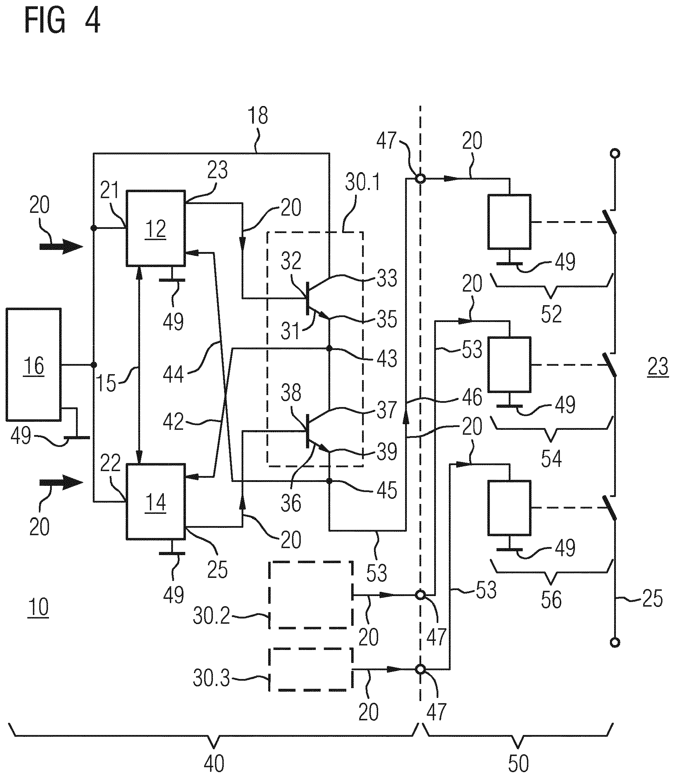

In FIG 4 ist eine erste Ausführungsform der erfindungsgemäßen Sicherheitsschaltvorrichtung 10 dargestellt, die im Wesentlichen in eine Steuerseite 40 und eine Betätigungsseite 50 gegliedert ist. Auf der Steuerseite 40 ist eine Spannungsversorgung 16 angeordnet, die zur Stromversorgung der Komponenten auf der Steuerseite 40 dient. Die Spannungsversorgung 16 stellt eine Betriebsspannung 18 für eine erste und zweite Steuereinheit 12, 14 und eine erste Überwachungseinheit 30.1 bereit. Die Steuereinheiten 12, 14 und das Netzteil 16 sind jeweils mit einem Masse-Anschluss 49 verbunden. Über eine nicht näher dargestellte Steuerleitung werden Schaltbefehle 20 an die erste und eine zweite Steuereinheit 12, 14 ausgegeben, die von diesen in einen Schaltvorgang auf der Betätigungsseite 50 umgesetzt werden. Die Schaltbefehle 20 erreichen die Steuereinheiten 12, 14 über deren nicht näher dargestellte Signaleingänge. Die erste Überwachungseinheit 30.1 umfasst eine erstes und ein zweites Verknüpfungselement 31, 36, die als Transistoren ausgebildet sind und in Reihe geschaltet sind. An einem ersten Kollektor-Anschluss 33 liegt die Betriebsspannung 18 an. Ein erster Basis-Anschluss 32 der ersten Verknüpfungseinheit 31 ist mit einem Ausgang 17 der ersten Steuereinheit 12 verbunden. Der Schaltbefehl 20 wird von der ersten Steuereinheit 12 als Betätigung des ersten Basis-Anschlusses 32 in der ersten Verknüpfungselement 31 ausgegeben. Bei einer entsprechenden Betätigung am ersten Basis-Anschluss 32 erlaubt das erste Verknüpfungselement 31 einen Stromfluss durch einen ersten Emitter-Anschluss 35. Ferner liegt im Bereich des ersten Emitter-Anschlusses 35 der zweite Kollektor-Anschluss 37 des zweiten Verknüpfungselements 36 und dazwischen eine erste Verzweigung 43, von der ein erster Rückkanal 42 abzweigt. Der erste Rückkanal 42 wiederum führt zur zweiten Steuereinheit 14. Über den ersten Rückkanal 42 wird der Schaltzustand des ersten Verknüpfungselements 31 an die zweite Steuereinheit 14 gemeldet. Die zweite Steuereinheit 14 ist dazu ausgebildet, den Eingang des Rückkanals mit dem an der zweiten Steuereinheit 14 vorliegenden Schaltbefehls 20 abzugleichen und so einen bestimmungsgemäßen Schaltzustand am erste Verknüpfungselement 31 zu verifizieren oder einen fehlerhaften Schaltzustand zu identifizieren. Die Steuerseite 40 weist auch eine zweite und dritte Überwachungseinheit 30.2, 30.3 auf, die jeweils einem zweiten bzw. dritten Schaltelement 54, 56 auf der Betätigungsseite zugeordnet sind. Die zweite und dritte Überwachungseinheit 30.2, 30.3 sind jeweils analog der ersten Überwachungseinheit 30.1 ausgebildet und in gleicher Weise mit der ersten und zweiten Steuereinheit 12, 14 verbunden. Die Ausführungsform gemäß FIG 4 verwirklicht das Prinzip eines parallelen Aufbaus der Steuerseite 40. Bei Verwendung von lediglich zwei Steuereinheiten 12, 14 wird eine separate Sicherung der Ausgabe des Schaltbefehls 20 für jedes einzelne Schaltelement 52, 54, 56 durch die separaten Überwachungseinheiten 30.1, 30.2, 30.3 umgesetzt.

Analog zur ersten Steuereinheit 12 wird der Schaltbefehl 20 von der zweiten Steuereinheit 14 über deren Ausgang 19 an den zweiten Basis-Anschluss 38 des zweiten Verknüpfungselements 36 ausgegeben. Durch die entsprechende Betätigung des zweiten Basis-Anschlusses 38 erlaubt das zweite Verknüpfungselement 36 einen Stromfluss über einen zweiten Emitter-Anschluss 39. Der Stromfluss vom zweiten Emitter-Anschluss 39 zum Kopplungspunkt 47 erfolgt über einen Signalausgang 46. Ein vorliegender Stromfluss im Signalausgang 46 bildet den vorliegenden Schaltbefehl 20 an die Betätigungsseite 50 ab. Zwischen dem Kopplungspunkt 47 und dem zweiten Emitter-Anschluss 39 ist eine zweite Verzweigung 45 angeordnet, von der ein zweiter Rückkanal 44 zur ersten Steuereinheit 12 führt. Das über den zweiten Rückkanal 44 zur ersten Steuereinheit 12 geführt Signal stellt den Schaltzustand des zweiten Verknüpfungselements 36 dar. Die erste Steuereinheit 12 ist dazu ausgebildet, das über den zweiten Rückkanal 44 transportierte Signal mit dem vorliegenden Schaltbefehl 20 abzugleichen. Hierdurch ist die erste Steuereinheit 12 dazu ausgebildet, einen bestimmungsgemäßen Schaltzustand am zweiten Verknüpfungselement 36 zu verifizieren oder einen fehlerhaften Schaltzustand zu identifizieren.

Wenn die durch die erste Steuereinheit 12 ein fehlerhafter Schaltzustand am zweiten Verknüpfungselement 36 erkannt wird, ist die erste Steuereinheit 12 dazu ausgebildet, durch eine entsprechende Betätigung am ersten Basis-Anschluss 32 der ersten Verknüpfungseinheit 31 den Stromfluss zum ersten Emitter-Anschluss 35 zu unterbinden. Dadurch wird ein weiterer Betrieb auf Basis eines fehlerhaften Schaltbefehls 20 oder eines Hardwaredefekts in der Sicherheitsschaltvorrichtung 10 verhindert. Gleichermaßen ist die zweite Steuereinheit 14 dazu ausgebildet, bei Erkennung eines fehlerhaften Schaltzustands am ersten Verknüpfungselement 31 durch Betätigung des zweiten Basis-Anschlusses 38 den Stromfluss zum zweiten Emitter-Anschluss 39 zu unterbinden.

In der erfindungsgemäßen Sicherheitsschaltvorrichtung wird so auf der Steuerseite 40 mindestens eine Ein-Fehler-Toleranz, auch Hardware-Fehlertoleranz von Eins genannt, verwirklicht.

Über die Verknüpfungselemente 31, 36 der Überwachungseinheit wird zwischen den Steuereinheiten 12, 14 eine indirekte Überkreuz-Überwachung ausgebildet. Ferner sind die erste und zweite Steuereinheit 12, 14 unmittelbar über eine Diagnoseleitung 15 miteinander verbunden. Die Diagnoseleitung umfasst auch eine Ansteuerleitung, die ein gegenseitiges Abschalten der Steuereinheiten ermöglicht. Hierdurch wird eine direkte gegenseitige Überwachung verwirklicht, so dass durch die Kombination mit der indirekten Überkreuz-Überwachung ein besonders hohes Maß an Sicherheit auf der Steuerseite 40 erzielt wird. Insbesondere wird auf der Steuerseite 40 bei einem vorliegenden Hardwarefehler einen Diagnosedeckungsgrad von 90% bis 99% erzielt.

Die Verbindung zwischen der Steuerseite 40 und der Betätigungsseite 50 erfolgt über den Kopplungspunkt 47. Auf der Betätigungsseite 50 sind ein erstes, ein zweites und ein drittes Schaltelement 52, 54, 56 angeordnet, die als Standardrelais ausgebildet sind. Die Schaltelemente 52, 54, 56 sind jeweils dazu ausgebildet, eine Leitung 25 eines nicht näher dargestellten Lastkreises 23 zu unterbrechen. Das erste Schaltelement 52 ist über den Kopplungspunkt 47 an die ersten Überwachungseinheit 30.1 angeschlossen, über die der Schaltbefehl 20 bei entsprechender Betätigung und Funktionstüchtigkeit der Komponenten auf der Steuerseite 40 an das Schaltelement 52 ausgeben wird. Das zweite und dritte Schaltelement 54, 56 sind jeweils über eigene Kopplungspunkte mit der zweiten Überwachungseinheit 30.2 bzw. der dritten Überwachungseinheit 30.3 gekoppelt. Hierdurch wird pro Schaltelement 52, 54, 56 ein hohes Maß an Betriebssicherheit. Jedes der Schaltelemente 52, 54, 56 verfügt über einen separaten Masse-Anschluss 49, so dass jedes der Schaltelemente pp-geschaltet ist. Die Parallelschaltung der Schaltelemente 52, 54, 56 gewährleistet auch bei vorliegen von zwei Hardware-Fehlern auf der Betätigungsseite 50 noch ein sicheres Trennen der Leitung 25 des Lastkreises 23. Insgesamt weist die Betätigungsseite 50 mindestens eine Zwei-Fehler-Toleranz, auch als Hardware-Fehlertoleranz von Zwei bezeichnet, auf. Mindestens zwei der Schaltelemente 52, 54, 56 sind diversitär, als bautypenfremd ausgebildet, so dass die Fehlertoleranz der Betätigungsseite 50 weiter gesteigert ist. Die Betätigungsseite 50 erreicht bei einem Vorliegen von zwei Hardware-Fehlern eine Safe-Failure-Fraction SFF von 60%, insbesondere von 70% bis 90%.

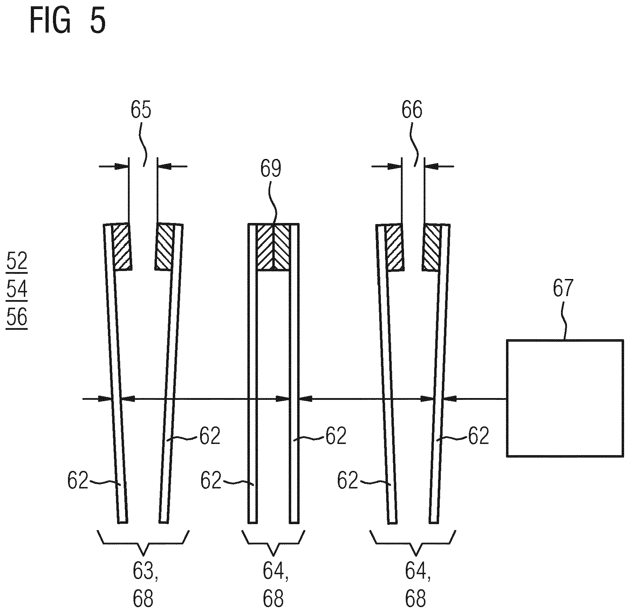

In FIG 5 sind schematisch die Kontakte 62 eines Schaltelements 52, 54, 56 abgebildet, das als Standard-Komponente ausgebildet ist. Die Kontakte 62 gehören als Kontaktfederpaare 68 zu einem Öffner 63 und zwei Schließern 64. Der vorliegende Schaltzustand ist durch einen Antrieb 67 einstellbar. Im Schaltzustand nach FIG 5 liegt ein Kontaktkleben, also eine Verschweißung 69, am Schließer 64 vor. Bei der Betätigung des Antriebs 67 ist das Kontaktfederpaar 68 mit der Verschweißung 69 sich nicht wie der benachbarte Schließer 64 trennbar. An den Kontakten 62 geöffneten Öffners 63 liegt ein sicherer Kontaktabstand 65 vor, so dass bei den vorliegenden Betriebsspannungen auch kein Lichtbogen entstehen kann. Derartige sichere Kontaktabstände betragen mindestens 0,5 mm. Beim intakten Schließer 64, also der Schließer 64 ohne Verschweißung 69, hingegen bedeutet das Fehlen einer Zwangsführung der Kontakte 62, dass durch die Betätigung mittels des Antriebs 67 ein unsicherer Kontaktabstand 66 vorliegt. In einem solchen unsicheren Kontaktabstand 66 kann durch einen Lichtbogen ein Stromfluss eintreten. Ein unsicherer Kontaktabstand beträgt dabei bis zu 0,5 mm. Der Schließer 64 ohne Verschweißung nimmt damit einen unbestimmten Schaltzustand ein.

## Patentansprüche

1. Sicherheitsschaltvorrichtung (10), umfassend eine Steuerseite (40) mit mindestens einer Ein-Fehler-Toleranz, die eine erste und zweite Steuereinheit (12, 14) aufweist, die jeweils zur Ausgabe eines Schaltbefehls (20) ausgebildet sind, und mindestens eine Überwachungseinheit (30, 30.1, 30.2, 30.3) umfasst, die ein erstes und ein zweites Verknüpfungselement (31, 36) aufweist,
wobei die erste Steuereinheit (12) zum Ausgeben des Schaltbefehls (20) an das erste Verknüpfungselement (31) und die zweite Steuereinheit (14) zum Ausgeben des Schaltbefehls (20) an das zweite Verknüpfungselement (36) ausgebildet ist, wobei das erste und zweite Verknüpfungselement (31, 36) zum Ausgeben des Schaltbefehls (20) an mindestens ein Schaltelement von mindestens zwei Schaltelementen (52, 54, 56) auf einer Betätigungsseite (50) ausgebildet ist und,
wobei die mindestens zwei Schaltelemente (52, 54, 56) dazu ausgebildet sind, eine Leitung (25) eines Lastkreises (23) zu unterbrechen,
**dadurch gekennzeichnet, dass**
das mindestens eine Schaltelement der mindestens zwei Schaltelemente (52, 54, 56) in Reihe mit dem ersten und zweiten Verknüpfungselement (31, 36) geschaltet ist,
die mindestens zwei Schaltelemente (52, 54, 56) jeweils als Standard-Komponenten ausgebildet sind, die frei von einer Zwangsführung ihrer Kontakte (62) sind,
und das erste Verknüpfungselement (31) über einen ersten Rückkanal (42) mit der zweiten Steuereinheit (14) und das zweite Verknüpfungselement (36) über einen zweiten Rückkanal (44) mit der ersten Steuereinheit (12) unmittelbar verbunden ist.

2. Sicherheitsschaltvorrichtung (10) nach Anspruch 1, **dadurch gekennzeichnet, dass** die erste Steuereinheit (12) unmittelbar mit einem Basis-Anschluss (32) des ersten Verknüpfungselements (31) verbunden ist und/oder die zweite Steuereinheit (14) unmittelbar mit einem Basis-Anschluss (38) des zweiten Verknüpfungselements (36) verbunden ist.

3. Sicherheitsschaltvorrichtung (10) nach Anspruch 1 oder 2, **dadurch gekennzeichnet, dass** die Betätigungsseite (50) mindestens eine Zwei-Fehler-Toleranz und/oder eine Safe-Failure-Fraction von mindestens 60%, bevorzugt von 70% bis 90%, aufweist.

4. Sicherheitsschaltvorrichtung (10) nach einem der Ansprüche 1 bis 3, **dadurch gekennzeichnet, dass** das erste und/oder zweite Verknüpfungselement (31, 36) einen Kollektor-Anschluss (33, 37), einen Basis-Anschluss (32, 38) und einen Emitter-Anschluss (35, 39) aufweist.

5. Sicherheitsschaltvorrichtung (10) nach Anspruch 4, **dadurch gekennzeichnet, dass** der erste Emitter-Anschluss (35) des ersten Verknüpfungselements (31) unmittelbar mit dem zweiten Kollektor-Anschluss (37) des zweiten Verknüpfungselements (36) verbunden ist oder der erste Kollektor-Anschluss (33) des ersten Verknüpfungselements (31) unmittelbar mit dem zweiten Emitter-Anschluss (39) des zweiten Verknüpfungselements (36) verbunden ist.

6. Sicherheitsschaltvorrichtung (10) nach einem der Ansprüche 1 bis 5, **dadurch gekennzeichnet, dass** das erste und/oder zweite Verknüpfungselement (31, 36) jeweils als Transistor, Feldeffekttransistor, Thyristor, Triac, IGBT, Treiber-Baustein, integrierter Schaltkreis oder UND-Baustein ausgebildet ist.

7. Sicherheitsschaltvorrichtung (10) nach einem der Ansprüche 1 bis 6, **dadurch gekennzeichnet, dass** eine Steuerseite (40) der Sicherheitsschaltvorrichtung (10) die erste und/oder zweite Steuereinheit (12, 14) und/oder die Überwachungseinheit (30, 30.1, 30.2, 30.3) umfasst und als ASIC ausgebildet ist.

8. Sicherheitsschaltvorrichtung (10) nach einem der Ansprüche 1 bis 7, **dadurch gekennzeichnet, dass** ein erstes Schaltelement (52) mittels einer ersten Überwachungseinheit (30.1) betätigbar ausgebildet ist und ein zweites Schaltelement (54) mittels einer zweiten Überwachungseinheit (30.2) betätigbar ausgebildet ist.

9. Sicherheitsschaltvorrichtung (10) nach einem der Ansprüche 1 bis 6, **dadurch gekennzeichnet, dass** die mindestens zwei Schaltelemente (52, 54, 56) über eine gemeinsame Signalleitung (53) betätigbar ausgebildet sind.

10. Sicherheitsschaltvorrichtung (10) nach einem der Ansprüche 1 bis 9, **dadurch gekennzeichnet, dass** die mindestens zwei Schaltelemente (52, 54, 56) jeweils als Relais, Hilfsschütz, Hauptschütz, oder als elektromagnetisches Ventil ausgebildet sind.

11. Sicherheitsschaltvorrichtung (10) nach einem der Ansprüche 1 bis 10, **dadurch gekennzeichnet, dass** die mindestens zwei Schaltelemente (52, 54, 56) diversitär ausgebildet sind.

12. Sicherheitsschaltvorrichtung (10) nach einem der Ansprüche 1 bis 11, **dadurch gekennzeichnet, dass** die erste und zweite Steuereinheit (12, 14) zur gegenseitigen Diagnose miteinander verbunden sind.

13. Sicherheitsgerichtetes Gerät (70), das als Sicherheitsschaltgerät, als sicheres Koppelrelais, als sichere Relaisbaugruppe, als sicherer SPS-Relaisausgang oder als Sicherheitsmodul in einer SPS ausgebildet ist, **dadurch gekennzeichnet, dass** das sicherheitsgerichtete Gerät (70) mit einer Sicherheitsschaltvorrichtung (10) nach einem der Ansprüche 1 bis 12 versehen ist.

## Claims

1. Safety switching apparatus (10) comprising a control side (40) with at least one single-failure tolerance, having a first and second control unit (12, 14), each embodied to emit a switch command (20) and comprising at least one monitoring unit (30, 30.1, 30.2, 30.3) having a first and a second connection element (31, 36),
wherein the first control unit (12) is embodied to emit the switch command (20) to the first connection element (31) and the second control unit (14) is embodied to emit the switch command (20) to the second connection element (36),
wherein the first and second connection element (31, 36) is embodied to emit the switch command (20) to at least one switching element of at least two switching elements (52, 54, 56) on an actuation side (50) and
wherein the at least two switching elements (52, 54, 56) are embodied to interrupt a line (25) of a load circuit (23),
**characterised in that**
the at least one switching element of the at least two switching elements (52, 54, 56) is connected in series with the first and second connection element (31, 36),
the at least two switching elements (52, 54, 56) are each embodied as standard components that are free from a forced guidance of the contacts (62) thereof,
and the first connection element (31) is directly connected to the second control unit (14) via a first feedback channel (42) and the second connection element (36) is directly connected to the first control unit (12) via a second feedback channel (44) .

2. Safety switching apparatus (10) according to claim 1, **characterised in that** the first control unit (12) is directly connected to a base terminal (32) of the first connection element (31) and/or the second control unit (14) is directly connected to a base terminal (38) of the second connection element (36).

3. Safety switching apparatus (10) according to claim 1 or 2, **characterised in that** the actuation side (50) comprises at least one two-failure tolerance and/or has a safe failure fraction of at least 60%, preferably 70% to 90%.

4. Safety switching apparatus (10) according to one of claims 1 to 3, **characterised in that** the first and/or second connection element (31, 36) comprises a collector terminal (33, 37), a base terminal (32, 38) and an emitter terminal (35, 39).

5. Safety switching apparatus (10) according to claim 4, **characterised in that** the first emitter terminal (35) of the first connection element (31) is directly connected to the second collector terminal (37) of the second connection element (36) or the first collector terminal (33) of the first connection unit (31) is directly connected to the emitter terminal (39) of the second connection element (36).

6. Safety switching apparatus (10) according to one of claims 1 to 5, **characterised in that** the first and/or second connection element (31, 36) is in each case embodied as a transistor, field-effect transistor, thyristor, TRIAC, IGBT, driver module, integrated circuit or AND module.

7. Safety switching apparatus (10) according to one of claims 1 to 6, **characterised in that** a control side (40) of the safety switching apparatus (10) comprises the first and/or second control unit (12, 14) and/or the monitoring unit (30, 30.1, 30.2, 30.3) and is embodied as an ASIC.

8. Safety switching apparatus (10) according to one of claims 1 to 7, **characterised in that** a first switching element (52) can be actuated by means of a first monitoring unit (30.1) and a second switching element (54) can be actuated by means of a second monitoring unit (30.2).

9. Safety switching apparatus (10) according to one of claims 1 to 6, **characterised in that** the at least two switching elements (52, 54, 56) can be actuated via a common signal line (53) .

10. Safety switching apparatus (10) according to one of claims 1 to 9, **characterised in that** the at least two switching elements (52, 54, 56) are in each case embodied as a relay, auxiliary contactor, main contactor, or as an electromagnetic valve.

11. Safety switching apparatus (10) according to one of claims 1 to 10, **characterised in that** the at least two switching elements (52, 54, 56) are embodied as diverse.

12. Safety switching apparatus (10) according to one of claims 1 to 11, **characterised in that** the first and second control unit (12, 14) are connected to one another for mutual diagnosis.

13. Safety-related device (70) embodied as a safety switching apparatus, as a safe coupling relay, safe relay module, as safe PLC relay output as a safety module in a PLC, **characterised in that** the safety-related device (70) is provided with a safety switching apparatus (10) according to one of claims 1 to 12.

## Revendications

1. Montage (10) de coupure de sécurité, comprenant un côté (40) de commande ayant au moins une tolérance à un défaut, qui a une première et une deuxième unités (12, 14) de commande, qui sont constituées chacune pour l'émission d'une instruction (20) de coupure, et au moins une unité (30, 30.1, 30.2, 30.3) de contrôle, qui a un premier et un deuxième éléments (31, 36) de combinaison,
dans lequel la première unité (12) de commande est constituée pour l'envoi de l'instruction (20) de coupure au premier élément (31) de combinaison et la deuxième unité (14) de commande est constituée pour l'envoi de l'instruction (20) de coupure au deuxième élément (36) de combinaison,
dans lequel le premier et le deuxième éléments (31, 36) de combinaison sont constitués pour l'envoi de l'instruction (20) de coupure a au moins un élément de coupure d'au moins deux éléments (52, 54, 56) de coupure d'un côté (50) d'actionnement et,
dans lequel les au moins deux éléments (52, 54, 56) de coupure sont constitués pour interrompre une ligne (25) d'un circuit (23) de charge,
**caractérisé en ce que**
le au moins un élément de coupure des au moins deux éléments (52, 54, 56) de coupure est monté en série avec le premier et le deuxième élément (31, 36) de combinaison,
les au moins deux éléments (52, 54, 56) de coupure sont constitués chacun sous la forme d'un composant standard, qui sont exempts d'un guidage forcé de leurs contacts (62),
et le premier élément (31) de combinaison est relié directement à la deuxième unité (14) de commande par un premier canal (42) de retour et le deuxième élément (36) de combinaison à la première unité (12) de commande par un deuxième canal (44) de retour.

2. Montage (10) de sécurité suivant la revendication 1, **caractérisé en ce que** la première unité (12) de commande est reliée directement à une borne (32) de base du premier élément (31) de combinaison et/ou la deuxième unité (14) de commande est reliée directement à une borne (38) de base du deuxième élément (36) de combinaison.

3. Montage (10) de sécurité suivant la revendication 1 ou 2, **caractérisé en ce que** le côté (50) d'actionnement a au moins une tolérance à deux défauts et/ou une fraction safe-failure d'au moins 60 %, de préférence de 70 % à 90 %.

4. Montage (10) de sécurité suivant l'une des revendications 1 à 3, **caractérisé en ce que** le premier et/ou le deuxième élément (31, 36) de combinaison a une borne (33, 37) de collecteur, une borne (32, 38) de base et une borne (35, 39) d'émetteur.

5. Montage (10) de sécurité suivant la revendication 4, **caractérisé en ce que** la première borne (35) d'émetteur du premier élément (31) de combinaison est reliée directement à la deuxième borne (37) de collecteur du deuxième élément (36) de combinaison ou la première borne (33) de collecteur du premier élément (31) de combinaison est reliée directement à la deuxième borne (39) d'émetteur du deuxième élément (36) de combinaison.

6. Montage (10) de sécurité suivant l'une des revendications 1 à 5, **caractérisé en ce que** le premier et/ou le deuxième élément (31, 36) de combinaison est constitué respectivement sous la forme d'un transistor, d'un transistor à effet de champ, d'un thyristor, d'un triac, d'un IGBT, d'un module d'attaque, d'un circuit intégré ou d'un module ET.

7. Montage (10) de sécurité suivant l'une des revendications 1 à 6, **caractérisé en ce qu'**un côté (40) de commande du montage (10) de coupure de sécurité comprend la première et/ou la deuxième unité (12, 14) de commande et/ou l'unité (30, 30.1, 30.2, 30.3) de contrôle et est constitué sous la forme d'un ASIC.

8. Montage (10) de sécurité suivant l'une des revendications 1 à 7, **caractérisé en ce qu'**un premier élément (52) de coupure est constitué de manière à pouvoir être actionné au moyen d'une première unité (30.1) de contrôle et un deuxième élément (54) de coupure est constitué de manière à pouvoir être actionné au moyen d'une deuxième unité (30.2) de contrôle.

9. Montage (10) de sécurité suivant l'une des revendications 1 à 6, **caractérisé en ce que** les au moins deux éléments (52, 54, 56) de coupure sont constitués de manière à pouvoir être actionnés par une ligne (53) commune de signal.

10. Montage (10) de sécurité suivant l'une des revendications 1 à 9, **caractérisé en ce que** les au moins deux éléments (52, 54, 56) de coupure sont constitués chacun sous la forme d'un relais, d'un contacteur auxiliaire, d'un contacteur principal ou d'une électrovanne.

11. Montage (10) de sécurité suivant l'une des revendications 1 à 10, **caractérisé en ce que** les au moins deux éléments (52, 54, 56) de coupure sont constitués diversement.

12. Montage (10) de sécurité suivant l'une des revendications 1 à 11, **caractérisé en ce que** la première et la deuxième unités (12, 14) de commande sont reliées entre elles pour le diagnostic mutuel.

13. Appareil (70) visant à la sécurité, qui est constitué sous la forme d'un appareil de coupure de sécurité, sous la forme d'un relais de connexion sécurisé, sous la forme d'un module de relais sécurisé, sous la forme d'une sortie de relais SPS sécurisée ou sous la forme d'un module sécurisé dans un SPS, **caractérisé en ce que** l'appareil (70) visant la sécurité est pourvu d'un montage (10) de coupure de sécurité suivant l'une des revendications 1 à 12.
